(19) Europäisches Patentamt / European Patent Office / Office européen des brevets

(11) **EP 4 446 440 A1**

(12) **EUROPEAN PATENT APPLICATION**
published in accordance with Art. 153(4) EPC

(43) Date of publication:
**16.10.2024  Bulletin 2024/42**

(21) Application number: **23778914.4**

(22) Date of filing: **13.02.2023**

(51) International Patent Classification (IPC):
**C21B 7/24** *(2006.01)*        **C21B 5/00** *(2006.01)*

(52) Cooperative Patent Classification (CPC):
**C21B 5/00; C21B 7/24**

(86) International application number:
**PCT/JP2023/004841**

(87) International publication number:
**WO 2023/188880 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **28.03.2022   JP 2022052123**

(71) Applicant: **JFE Steel Corporation
Tokyo 100-0011 (JP)**

(72) Inventors:
• **YASUHARA Satoki**
  **Tokyo 100-0011 (JP)**
• **YAMAMOTO Tetsuya**
  **Tokyo 100-0011 (JP)**
• **MATSUNAGA Ryotaro**
  **Tokyo 100-0011 (JP)**

(74) Representative: **Grünecker Patent- und
Rechtsanwälte
PartG mbB
Leopoldstraße 4
80802 München (DE)**

(54) **METHOD FOR DETERMINING SLAG LEVEL OF BLAST FURNACE, METHOD FOR OPERATING BLAST FURNACE, AND CONTROL DEVICE**

(57) A method for determining the slag level of a blast furnace includes acquiring an image of a raceway (5) inside the blast furnace, the image being captured through a tuyere (2) by a camera (7) installed in front of the tuyere (2), the tuyere (2) being installed in a furnace wall (1) of the blast furnace, calculating an average brightness of the image, calculating a degree of raw ore dropping, which contributes to a reduction in the brightness of the image, based on the image, calculating a corrected average brightness by correcting the average brightness based on the degree of raw ore dropping, and determining the slag level based on the corrected average brightness.

*FIG. 1*

EP 4 446 440 A1

# EP 4 446 440 A1

## Description

### TECHNICAL FIELD

The present disclosure relates to a method for determining the slag level of a blast furnace, a method for operating a blast furnace, and a control unit.

### BACKGROUND

A blast furnace is equipment located upstream in the process of manufacturing steel. Blast furnaces produce pig iron from raw materials such as iron ore, coke, and limestone. The raw materials such as iron ore, coke, and limestone are charged into the blast furnace from the top of the furnace. Approximately 40 tuyere are installed around the bottom of the blast furnace. In a blast furnace, hot blast at approximately 1,000 °C blown in through the tuyere causes iron ore to react with coke and be reduced to yield liquid pig iron.

During pig iron production, impurities combine with limestone to form slag. If the slag level, which is the height of the slag surface, rises and reaches the tuyere, it can cause blowouts in the lower part of the blast furnace. A blowout is a phenomenon in which hot blast blown into the blast furnace from the tuyere flows locally in the circumferential direction inside the blast furnace. When a blowout occurs, the top of the blast furnace can be damaged.

When the slag level exceeds a predetermined threshold, conventional measures taken to prevent blowouts from occurring include overlap tapping, in which two tapholes are opened at the same time to lower the slag level, and reducing the pressure in the furnace by reducing the blast volume.

Known methods for measuring the slag level include the mass balance method, the taphole nitrogen injection method, the electrical resistance method, and the furnace body strain measurement method.

The mass balance method is a method for estimating the slag level based on the difference between the amount of material fed into the blast furnace and the amount discharged. The taphole nitrogen injection method is a method for injecting nitrogen through the taphole and calculating the slag level from the nitrogen pressure. The electrical resistance method is a method for determining the slag level by measuring the electrical resistance when an alternating current is applied to electrodes attached to the inside of the iron skin of the blast furnace. The furnace body strain measurement method is a method for determining the slag level by calculating the strain using a strain measuring instrument attached to the surface of the iron skin of the blast furnace.

Patent Literature (PTL) 1 discloses a method for determining the slag level by detecting the amount of change in radiant heat from the surface of the slag using a thermometer embedded in the tuyere. PTL 2 discloses a method for determining the slag level by measuring the electromotive force generated, as the hot metal level changes, by electrodes welded to the surface of the iron skin of a blast furnace.

### CITATION LIST

#### Patent Literature

PTL 1: JP H1-198412 A
PTL 2: JP 2000-192123 A

### SUMMARY

(Technical Problem)

The mass balance method requires information such as the instantaneous pig iron and slag production rate, the coke void ratio, and wear conditions of the furnace bricks. However, these pieces of information are difficult to measure. The taphole nitrogen injection method is not suitable for regular use because it requires charging a lance through the taphole. The electrical resistance method has low accuracy because the electrical resistance fluctuates with the furnace heat level. The furnace body strain measurement method requires strain measurement instruments to be installed throughout the blast furnace, which is costly.

The method disclosed in PTL 1 is also problematic in that as raw ore dropping increases, the tuyere embedded temperature decreases and cannot be measured accurately. The method disclosed in PTL 2 requires opening the iron skin to bring the electrodes into contact with the carbon bricks. However, opening the iron skin ends up damaging the furnace body.

Conventionally known methods for measuring the slag level thus have room for improvement.

It is an aim of the present disclosure to provide a method for determining the slag level of a blast furnace, a method for operating a blast furnace, and a control unit that can improve methods for measuring the slag level.

(Solution to Problem)

A method for determining slag level of a blast furnace according to an embodiment of the present disclosure includes

acquiring an image of a raceway inside the blast furnace, the image being captured through a tuyere by a camera installed in front of the tuyere, the tuyere being installed in a furnace wall of the blast furnace;
calculating an average brightness of the image;
calculating a degree of raw ore dropping based on the image;
calculating a corrected average brightness by correcting the average brightness based on the degree of raw ore dropping; and
determining the slag level based on the corrected average brightness.

A method for operating a blast furnace according to an embodiment of the present disclosure includes performing overlap tapping or a process to reduce blast volume from the tuyere to the blast furnace in a case in which the corrected average brightness calculated using the aforementioned method for determining a slag level is lower than a predetermined threshold.

A control unit of a blast furnace according to an embodiment of the present disclosure is a control unit for determining a slag level of a blast furnace, the control unit including:
a controller configured to

acquire an image of a raceway inside the blast furnace, the image being captured through a tuyere by a camera installed in front of the tuyere, the tuyere being installed in a furnace wall of the blast furnace,
calculate an average brightness of the image,
calculate a degree of raw ore dropping based on the image,
calculate a corrected average brightness by correcting the average brightness based on the degree of raw ore dropping, and
determine the slag level based on the corrected average brightness.

(Advantageous Effect)

The method for determining the slag level of a blast furnace, the method for operating a blast furnace, and the control unit according to the present disclosure can improve methods for measuring the slag level.

BRIEF DESCRIPTION OF THE DRAWINGS

In the accompanying drawings:

FIG. 1 is a diagram illustrating an example of a blast furnace to which the method for determining the slag level of a blast furnace according to an embodiment of the present disclosure is applied;
FIG. 2 is an enlarged view of the area around the tuyere in FIG. 1;
FIG. 3 is a diagram schematically illustrating an example configuration of a control unit according to an embodiment of the present disclosure;
FIG. 4A is a diagram illustrating an example of an image in the case of a small amount of raw ore dropping;
FIG. 4B is a diagram illustrating an example of an image in the case of a large amount of raw ore dropping;
FIG. 5 is a flowchart illustrating an example of procedures in the method for determining slag level according to an embodiment of the present disclosure; and
FIG. 6 is a diagram illustrating the time variation of various data in an Example.

DETAILED DESCRIPTION

Embodiments of the present disclosure will be described below, with reference to the drawings.

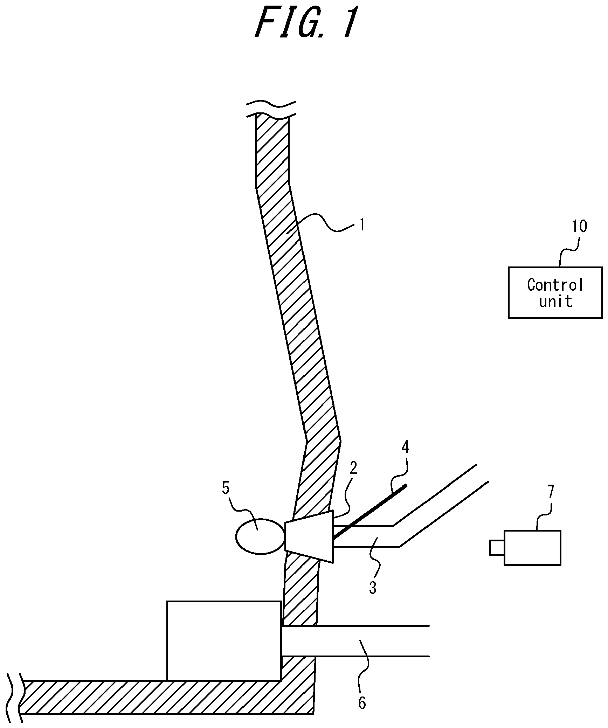

FIG. 1 is a diagram illustrating an example of a blast furnace to which the method for determining the slag level of a blast furnace according to an embodiment of the present disclosure is applied.

Raw materials such as iron ore, coke, and limestone are charged into a blast furnace from the top of the furnace. The blast furnace produces pig iron from raw materials such as iron ore, coke, and limestone. During pig iron production, impurities combine with limestone to form slag.

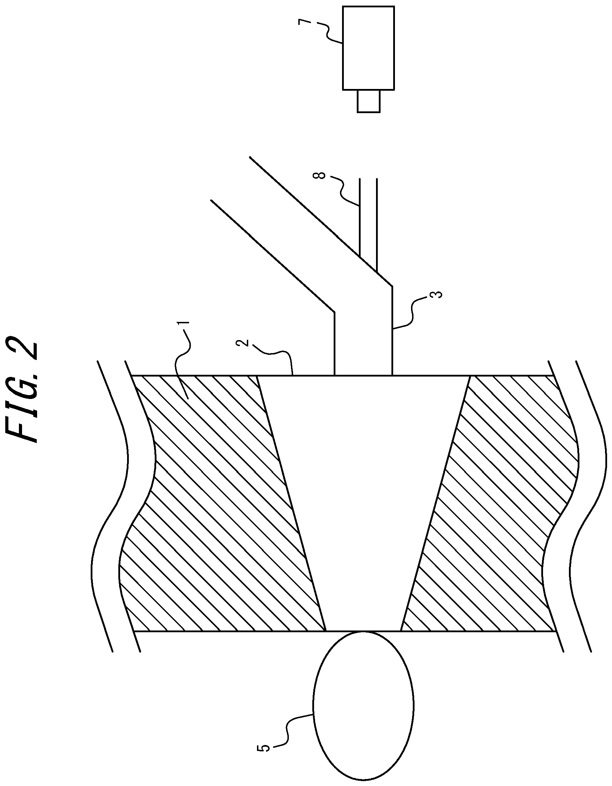

A tuyere 2 is installed at the bottom of a furnace wall 1 of the blast furnace. FIG. 2 is an enlarged view of the area around the tuyere 2. A lance 4, described below, is omitted from FIG. 2. The configuration of a blast furnace, to which is applied the method for determining the slag level of a blast furnace according to an embodiment of the present disclosure, is described with reference to FIGS. 1 and 2. The slag level refers to the height of the surface of the slag.

The tuyere 2 is a nozzle that enables hot blast to be blown into the blast furnace. Although one tuyere 2 is illustrated in FIG. 1, a plurality of tuyeres 2 may be installed in the lower part of the furnace wall 1 of the blast furnace.

A blast pipe 3 is connected to the tuyere 2. The blast pipe 3 is a pipe for blowing hot blast supplied from a hot air oven, not illustrated, into the blast furnace.

A lance 4 is installed in the blast pipe 3 so as to penetrate a portion of the wall of the blast pipe 3. From the lance 4, it is possible to inject fuel such as pulverized coal, oxygen, or city gas into the blast furnace.

A combustion space, called a raceway 5, is formed in the interior of the blast furnace near the tuyere 2. Coke combustion and gasification take place primarily in this raceway 5. Iron ore is reduced by coke combustion and gasification to produce pig iron. The produced pig iron is discharged through a taphole 6.

As illustrated in FIG. 2, a monitoring window 8 is installed in the blast pipe 3. The monitoring window 8 enables monitoring of the interior of the blast furnace through the tuyere 2.

A camera 7 is installed in front of the monitoring window 8, i.e., in front of the tuyere 2. The camera 7 can capture images of the raceway 5 through the tuyere 2 from the monitoring window 8.

The camera 7 may be any camera capable of capturing images of the raceway 5. For example, the camera 7 may be a monochrome camera, a color camera, or the like.

The control unit 10 acquires an image of the raceway 5 captured by the camera 7 from the camera 7. The control unit 10 determines the slag level inside the blast furnace based on the image of the raceway 5 acquired from the camera 7.

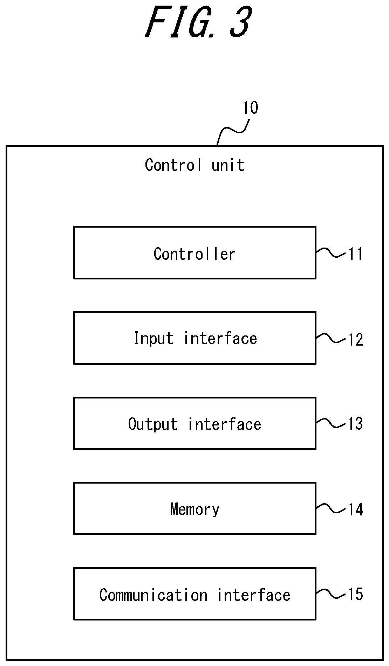

FIG. 3 is a diagram schematically illustrating an example configuration of the control unit 10 according to an embodiment of the present disclosure. The control unit 10 may be a general-purpose computer, such as a workstation or personal computer, or may be a dedicated computer for use in the method for determining the slag level of a blast furnace according to an embodiment of the present disclosure.

Referring to FIG. 3, the configuration of the control unit 10 is described. The control unit 10 includes a controller 11, an input interface 12, an output interface 13, a memory 14, and a communication interface 15.

The controller 11 includes at least one processor, at least one dedicated circuit, or a combination thereof. The processor is a general-purpose processor such as a Central Processing Unit (CPU) or a Graphics Processing Unit (GPU), or a dedicated processor that is dedicated to specific processing. Examples of dedicated circuits can include a Field-Programmable Gate Array (FPGA) and an Application Specific Integrated Circuit (ASIC).

The controller 11 reads programs, data, and the like stored in the memory 14 and executes various functions.

The input interface 12 includes one or more interfaces for input to detect user input and acquire input information based on user operations. For example, the input interface 12 includes a physical key, a capacitive key, a touch screen integrally provided with a display of the output interface 13, or a microphone that accepts voice input.

The output interface 13 includes one or more interfaces for output to output information and notify the user. For example, the output interface 13 includes a display for outputting information in the form of images or a speaker for outputting information in the form of audio. The display included in the output interface 13 may, for example, be a Liquid Crystal Display (LCD), a Cathode Ray Tube (CRT) display, or the like.

The memory 14 is, for example, a flash memory, a hard disk, an optical memory, or the like. A portion of the memory 14 may be external to the control unit 10. In this case, the portion of the memory 14 may be a hard disk, a memory card, or the like connected to the control unit 10 by any interface.

The memory 14 stores programs for the controller 11 to perform each function, data used by the programs, and the like.

The communication interface 15 includes at least one of a communication module compatible with wired communication and a communication module compatible with wireless communication. The control unit 10 can communicate with other apparatuses and the like via the communication interface 15.

Next, the process by which the control unit 10 determines the slag level inside the blast furnace based on the image of the raceway 5 acquired from the camera 7 is described.

The brightness of the raceway 5 correlates with the slag level. Using this correlation, the control unit 10 determines the slag level based on the brightness of the image of the raceway 5.

In blast furnaces, a phenomenon called "raw ore dropping" occurs, in which unreduced iron ore and the like that have not been completely melted drop down. When raw ore dropping occurs, the ore that drops due to the raw ore dropping may appear in the image of the raceway 5. This results in a decrease in the average brightness of the image of the raceway 5, since the brightness of the image is decreased in the areas where the raw ore dropping appears.

If the average brightness of the image of the raceway 5 decreases due to raw ore dropping, the average brightness of the image of the raceway 5 ends up lower than the brightness corresponding to the slag level from the effect of the raw ore dropping. The control unit 10 therefore corrects the average brightness of the image of the raceway 5 based on the degree of raw ore dropping. The control unit 10 then determines the slag level based on the average brightness of the image of the raceway 5 after correction (hereinafter also referred to as "corrected average brightness").

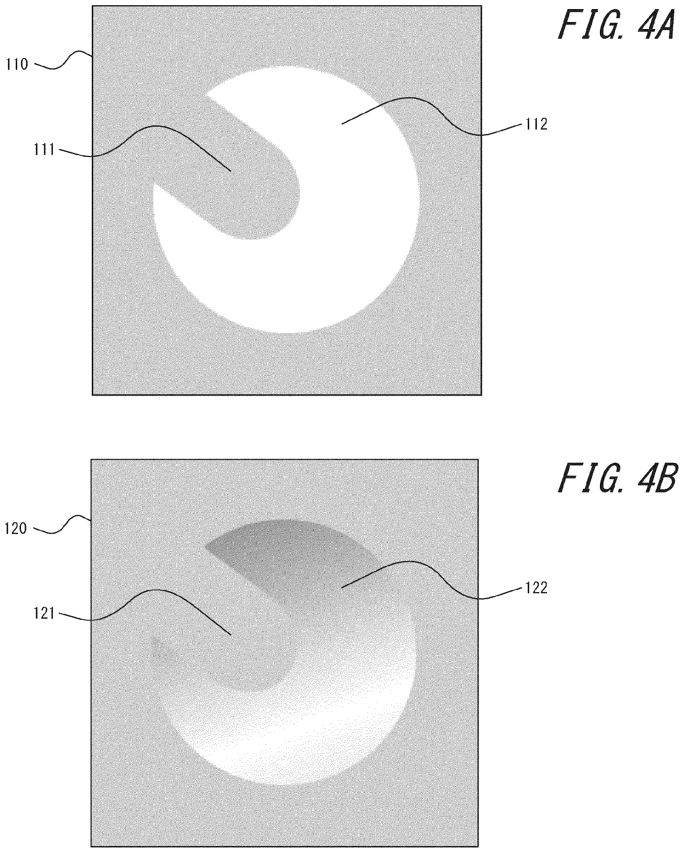

FIG. 4A is a diagram illustrating an example of an image 110 of the raceway 5 in the case of a small amount of raw ore dropping. FIG. 4B is a diagram illustrating an example of an image 120 of the raceway 5 in the case of a large amount of raw ore dropping.

In FIG. 4A, the reference sign 111 represents an image reflecting the lance 4. The reference sign 112 represents an image of the raceway 5 visible through the tuyere 2.

In FIG. 4B, the reference sign 121 represents an image reflecting the lance 4. The reference sign 112 represents an image of the raceway 5 visible through the tuyere 2.

Comparing the image indicated by the reference sign 122 in FIG. 4B with the image indicated by the reference sign 112 in FIG. 4A, the image indicated by the reference sign 122 has many areas of low brightness. These low brightness areas indicate that the brightness is low due to the appearance of raw ore dropping.

The controller 11 of the control unit 10 acquires an image of the raceway 5 captured by the camera 7 from the camera 7 via the communication interface 15.

The controller 11 calculates the average brightness of the image of the raceway 5 acquired from the camera 7. Based on the image of the raceway 5 acquired from the camera 7, the controller 11 calculates the degree of raw ore dropping that contributes to the decrease in brightness of the image of the raceway 5.

The controller 11 may calculate the degree of raw ore dropping by image analysis on the image of the raceway 5.

The controller 11 may, for example, calculate one-dimensional statistics such as standard deviation, variance, skewness, and kurtosis using a brightness histogram that indicates the frequency of occurrence of brightness for each pixel in the image of the raceway 5, and may use these one-dimensional statistics as indices to calculate the degree of raw ore dropping.

The controller 11 may, for example, calculate two-dimensional statistics such as homogeneity, entropy, contrast, and heterogeneity using an autocorrelation function that indicates the similarity of adjacent pixels in the image of the raceway 5, and may use these two-dimensional statistics as indices to calculate the degree of raw ore dropping.

The controller 11 may also use the frame finite difference method to calculate the degree of raw ore dropping by detecting the moving raw ore from the difference between images of the raceway 5 that are consecutive over time and calculating the portion of the raw ore occupying the image of the raceway 5.

Upon calculating the degree of raw ore dropping, the controller 11 calculates a corrected average brightness by correcting the average brightness of the image of the raceway 5 based on the degree of raw ore dropping.

The controller 11 can calculate the corrected average brightness by, for example, adding the amount of brightness reduction caused by raw ore dropping to the average brightness of the image of the raceway 5, as illustrated in Equation (1) below.

$$y = y0 + z \quad (1)$$

In Equation (1), y represents the corrected average brightness, y0 represents the average brightness of the image of the raceway 5, and z represents the amount of brightness reduction caused by raw ore dropping.

The controller 11 can, for example, calculate the amount of brightness reduction z caused by raw ore dropping, as illustrated in Equation (2) below.

$$z = a \times x^2 + b \times x + c \quad (2)$$

In Equation (2), x is an index indicating the degree of raw ore dropping, and a, b, and c are parameters.

The Equation (2) above is an example, and the formula by which the controller 11 calculates the amount of brightness reduction caused by raw ore dropping is not limited to the form of Equation (2). Instead of a quadratic formula, for example, the controller 11 may use a linear formula, a polynomial of the third degree or higher, or the like to calculate the amount of brightness reduction caused by raw ore dropping.

The controller 11 may identify the parameters a, b, and c of Equation (2) by prior learning and may store the identified parameters a, b, and c in the memory 14 in advance. The controller 11 may acquire a plurality of images of the raceway 5 and identify the parameters a, b, and c in Equation (2) using the acquired plurality of images of the raceway 5 as a data set.

The controller 11 calculates the slag level based on the calculated corrected average brightness and determines the slag level.

There is a negative correlation between the corrected average brightness and the slag level. The controller 11 determines that the slag level is low when the corrected average brightness is high and determines that the slag level is high when the corrected average brightness is low.

By thus calculating the corrected average brightness that corrects for the effect of raw ore dropping, the controller 11 can determine the slag level with a high degree of accuracy. The image of the raceway 5 can be captured simply by installing the camera 7 at the tuyere 2. Therefore, the method for determining the slag level according to the present embodiment achieves determination of the slag level at low cost. Furthermore, the method for determining the slag level according to the present embodiment does not require the embedding of electrodes or the like in the furnace wall 1 and therefore does not damage the furnace wall 1 of the blast furnace.

The controller 11 performs overlap tapping or a process to reduce the blast volume from the tuyere 2 to the blast furnace in a case in which the corrected average brightness is lower than a predetermined threshold. The predetermined threshold may, for example, be a threshold set to coincide with the timing at which an operator manually performed overlap tapping or a process to reduce blast volume in the past.

Overlap tapping is a process to open a plurality of tapholes 6. The controller 11 is capable of controlling the opening and closing of the tapholes 6 and performs overlap tapping by opening a plurality of the tapholes 6.

The controller 11 can also control the blast volume of the hot blast supplied from the blast pipe 3 to the blast furnace through the tuyere 2.

By thus performing overlap tapping or a process to reduce the blast volume from the tuyere 2 to the blast furnace in a case in which the corrected average brightness is lower than a predetermined threshold, the controller 11 can prevent blowouts from occurring in the blast furnace.

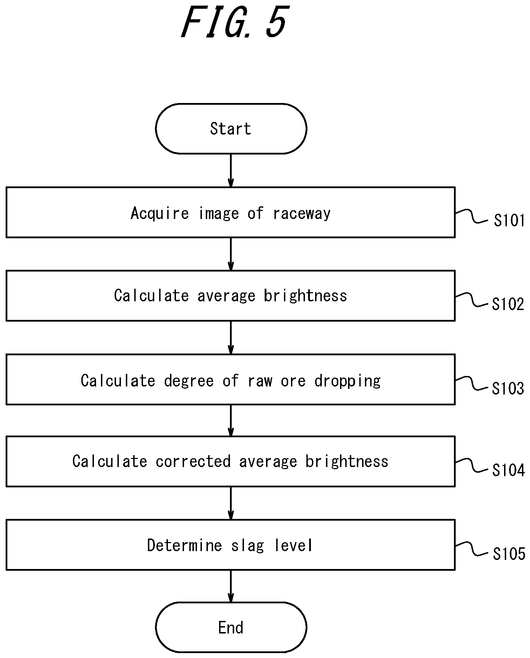

With reference to the flowchart in FIG. 5, an example of procedures in the method for determining slag level according to an embodiment of the present disclosure is described.

In step S101, the control unit 10 acquires an image of the raceway 5 captured by the camera 7 from the camera 7.

In step S102, the control unit 10 calculates the average brightness of the acquired image of the raceway 5.

In step S103, based on the acquired image of the raceway 5, the control unit 10 calculates the degree of raw ore dropping that contributes to the decrease in brightness of the image of the raceway 5.

In step S104, the control unit 10 corrects the average brightness, as calculated in step S102, based on the degree of raw ore dropping, as calculated in step S103, to calculate the corrected average brightness.

In step S 105, the control unit 10 determines the slag level based on the calculated corrected average brightness.

In step S105, the control unit 10 may perform overlap tapping or a process to reduce the blast volume from the tuyere 2 to the blast furnace in a case in which the calculated corrected average brightness is lower than a predetermined threshold. This enables the control unit 10 to prevent blowouts from occurring in the blast furnace.

EXAMPLES

To provide Examples, the case in which the degree of raw ore dropping is indexed using homogeneity, which is a two-dimensional statistic, is described. This homogeneity is a two-dimensional statistic of the image texture and is an index with a greater numerical value for homogeneity as the difference in brightness between adjacent pixels is smaller. In these Examples, a process to perform overlap tapping was performed in a case in which the corrected average brightness of the image of the raceway 5 was 150 or less.

The homogeneity was calculated by Equation (3) below.

$$\text{Homogeneity} = \sum_i \sum_j \frac{P_\delta(i,j)}{1 + (i-j)^2} \quad (3)$$

In Equation (3), $P_\delta(i,j)$ indicates the frequency with which pairs of a certain brightness are in adjacent elements.

$P_\delta(i, j)$ in Equation (3) was calculated by Equation (4) below.

$$P_\delta(i,j) = \frac{A_\delta(i,j)}{\sum_i \sum_j A_\delta(i,j)} \quad (4)$$

In Equation (4), $A_\delta(i, j)$ indicates the frequency with which the brightness is j at a point $\delta$ away from brightness i.

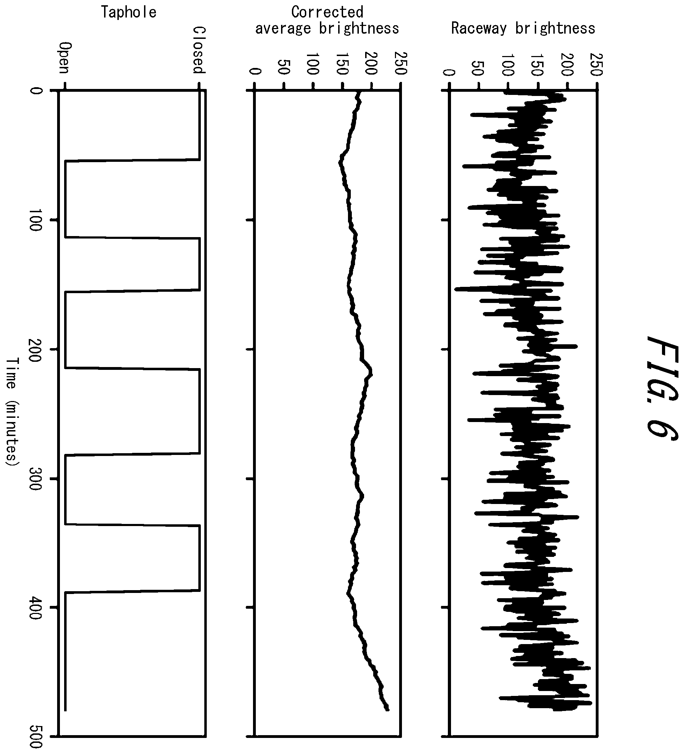

FIG. 6 is a diagram illustrating the time variation of various data in an Example. The top graph illustrates the change over time in average brightness of the image of the raceway 5. The second graph illustrates the change over time in the corrected average brightness. The bottom graph illustrates the opening and closing of the taphole 6 for overlap tapping.

As illustrated in FIG. 6, a comparison between the top graph with the bottom graph reveals no significant correlation between the average brightness of the image of the raceway 5 before correction and the overlap tapping.

A comparison between the second graph and the bottom graph reveals that when the corrected average brightness drops to 150, the corrected average brightness increases when the tapholes 6 are opened to perform overlap tapping, and the corrected average brightness subsequently decreases once the tapholes 6 are closed.

After six months of operation under the control as in this Example, no blowout occurred in the blast furnace. In other words, the slag level was prevented from rising to the tuyere 2.

As described above, the method for determining the slag level of a blast furnace according to the present embodiment includes acquiring an image, captured by the camera 7, of the raceway 5, calculating the average brightness of the image of the raceway 5, calculating the degree of raw ore dropping, which contributes to a reduction in the brightness of the image, based on the image of the raceway 5, calculating a corrected average brightness by correcting the average brightness based on the degree of raw ore dropping, and determining the slag level based on the corrected average brightness. By thus calculating the corrected average brightness that corrects for the effect of raw ore dropping, the method for determining the slag level of the blast furnace according to the present embodiment can determine the slag level with a high degree of accuracy. The image of the raceway 5 can be captured simply by installing the camera 7 at the tuyere 2. Therefore, the method for determining the slag level of a blast furnace according to the present embodiment achieves determination of the slag level at low cost. The method for determining the slag level of a blast furnace, the method for operating a blast furnace, and the control unit according to the present disclosure can therefore improve methods for measuring the slag level.

The present disclosure is not limited to the embodiments described above. For example, a plurality of blocks described in the block diagrams may be integrated, or a block may be divided. Instead of executing a plurality of steps described in the flowcharts in chronological order in accordance with the description, the plurality of steps may be executed in parallel or in a different order according to the processing capability of the apparatus that executes each step, or as required. Other modifications can be made without departing from the spirit of the present disclosure.

REFERENCE SIGNS LIST

1     Furnace wall
2     Tuyere
3     Blast pipe
4     Lance
5     Raceway
6     Taphole
7     Camera
8     Observation window
10    Control unit
11    Controller
12    Input interface
13    Output interface
14    Memory
15    Communication interface

**Claims**

1. A method for determining a slag level of a blast furnace, the method comprising:

   acquiring an image of a raceway inside the blast furnace, the image being captured through a tuyere by a camera installed in front of the tuyere, the tuyere being installed in a furnace wall of the blast furnace;
   calculating an average brightness of the image;
   calculating a degree of raw ore dropping based on the image;
   calculating a corrected average brightness by correcting the average brightness based on the degree of raw ore dropping; and
determining the slag level based on the corrected average brightness.

2. The method for determining a slag level of a blast furnace according to claim 1, wherein the determining of the slag level includes determining that the slag level is low when the corrected average brightness is high and determining that the slag level is high when the corrected average brightness is low.

3. The method for determining a slag level of a blast furnace according to claim 1 or 2, wherein the calculating of the degree of raw ore dropping includes calculating the degree of raw ore dropping by taking homogeneity of the image as an index.

4. A method for operating a blast furnace, the method comprising performing overlap tapping or a process to reduce blast volume from the tuyere to the blast furnace in a case in which the corrected average brightness calculated using the method for determining a slag level according to any one of claims 1 to 3 is lower than a predetermined threshold.

5. A control unit for determining a slag level of a blast furnace, the control unit comprising:
a controller configured to

acquire an image of a raceway inside the blast furnace, the image being captured through a tuyere by a camera installed in front of the tuyere, the tuyere being installed in a furnace wall of the blast furnace,
calculate an average brightness of the image,
calculate a degree of raw ore dropping based on the image,
calculate a corrected average brightness by correcting the average brightness based on the degree of raw ore dropping, and
determine the slag level based on the corrected average brightness.

# FIG. 1

# FIG. 2

# FIG. 3

10

Control unit

Controller ～11

Input interface ～12

Output interface ～13

Memory ～14

Communication interface ～15

FIG. 4A

FIG. 4B

# FIG. 5

```
                    ┌──────────────┐
                    │    Start     │
                    └──────┬───────┘
                           │
                           ▼
        ┌──────────────────────────────────────┐
        │      Acquire image of raceway        │ ～ S101
        └──────────────────┬───────────────────┘
                           │
                           ▼
        ┌──────────────────────────────────────┐
        │      Calculate average brightness    │ ～ S102
        └──────────────────┬───────────────────┘
                           │
                           ▼
        ┌──────────────────────────────────────┐
        │   Calculate degree of raw ore dropping │ ～ S103
        └──────────────────┬───────────────────┘
                           │
                           ▼
        ┌──────────────────────────────────────┐
        │ Calculate corrected average brightness │ ～ S104
        └──────────────────┬───────────────────┘
                           │
                           ▼
        ┌──────────────────────────────────────┐
        │         Determine slag level         │ ～ S105
        └──────────────────┬───────────────────┘
                           │
                           ▼
                    ┌──────────────┐
                    │     End      │
                    └──────────────┘
```

FIG. 6

## INTERNATIONAL SEARCH REPORT

| International application No. |
| --- |
| **PCT/JP2023/004841** |

### A. CLASSIFICATION OF SUBJECT MATTER

***C21B 7/24***(2006.01)i; ***C21B 5/00***(2006.01)i
FI: C21B7/24 305; C21B5/00 323

According to International Patent Classification (IPC) or to both national classification and IPC

### B. FIELDS SEARCHED

Minimum documentation searched (classification system followed by classification symbols)

C21B7/24; C21B5/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2015-227478 A (JFE STEEL CORP.) 17 December 2015 (2015-12-17) paragraphs [0001]-[0009], [0012], [0019], [0023] | 1-5 |
| A | JP 2015-048508 A (NIPPON STEEL & SUMITOMO METAL CORP.) 16 March 2015 (2015-03-16) paragraphs [0006]-[0008], [0037], [0061], [0122]-[0127] | 1-5 |
| A | JP 2015-025199 A (JFE STEEL CORP.) 05 February 2015 (2015-02-05) paragraphs [0025]-[0027], fig. 6-7 | 1-5 |
| A | JP 61-270319 A (NIPPON STEEL CORP.) 29 November 1986 (1986-11-29) page 1 | 1-5 |
| A | JP 2015-052148 A (NIPPON STEEL & SUMITOMO METAL CORP.) 19 March 2015 (2015-03-19) paragraphs [0001]-[0027] | 1-5 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 April 2023** | **25 April 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/004841**

| Patent document cited in search report | | | Publication date (day/month/year) | Patent family member(s) | Publication date (day/month/year) |
|---|---|---|---|---|---|
| JP | 2015-227478 | A | 17 December 2015 | (Family: none) | |
| JP | 2015-048508 | A | 16 March 2015 | (Family: none) | |
| JP | 2015-025199 | A | 05 February 2015 | (Family: none) | |
| JP | 61-270319 | A | 29 November 1986 | (Family: none) | |
| JP | 2015-052148 | A | 19 March 2015 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1198412 A

- JP 2000192123 A